**Europäisches Patentamt**

**European Patent Office**

**Office européen des brevets**

(11) Numéro de publication: **0 195 712**

**A2**

## (12) DEMANDE DE BREVET EUROPEEN

(21) Numéro de dépôt: **86400523.6**

(22) Date de dépôt: **12.03.86**

(51) Int. Cl.⁴: **C 03 C 27/04**
**B 60 R 1/04**

(30) Priorité: **16.03.85 DE 3509531**

(43) Date de publication de la demande:
**24.09.86 Bulletin 86/39**

(84) Etats contractants désignés:
**BE DE FR GB IT SE**

(71) Demandeur: **SAINT-GOBAIN VITRAGE**
**Les Miroirs 18, avenue d'Alsace**
**F-92400 Courbevoie(FR)**

(84) Etats contractants désignés:
**BE FR GB IT SE**

(71) Demandeur: **VEGLA Vereinigte Glaswerke GmbH**
**Viktoriaallee 3-5**
**D-5100 Aachen(DE)**

(84) Etats contractants désignés:
**DE**

(72) Inventeur: **Kunert, Heinz, Dr.**
**Am Krieler Dom 23**
**D-5000 Köln 41(DE)**

(72) Inventeur: **Scholl, Herbert M.**
**Heinbuchenweg 20**
**D-5100 Aachen-Haaren(DE)**

(72) Inventeur: **Cornils, Gerd**
**Bechant-Fabri-Strasse 48**
**D-5161 Merzemich-Girbelsrath(DE)**

(74) Mandataire: **Muller, René et al,**
**SAINT-GOBAIN RECHERCHE 39, quai Lucien Lefranc**
**F-93304 Aubervilliers(FR)**

(54) **Procédé de collage d'un accessoire automobile à la surface d'un vitrage.**

(57) L'invention concerne le collage d'un objet, notamment métallique, à une surface en verre, au moyen d'une colle à durcir.

Selon l'invention, on utilise un élément support (2) qui présente du côté à coller une zone de bord (6) en forme d'encadrement en relief par rapport à une zone centrale. Le collage au moyen de la colle à durcir (10) a lieu dans la zone centrale de l'élément support, tandis que pour maintenir en place l'élément support pendant le durcissement de la colle (10) on utilise une couche de colle de contact (7) déposée sur la zone de bord (6).

Application au collage d'un rétroviseur sur un pare-brise de véhicule automobile.

_Fig.2_

EP 0 195 712 A2

## PROCEDE DE COLLAGE D'UN ACCESSOIRE AUTOMOBILE

## A LA SURFACE D'UN VITRAGE

La présente invention concerne le collage d'un objet à une surface en verre, en particulier le collage d'un élément support pour la fixation d'un accessoire sur un vitrage automobile à l'intérieur de l'habitacle du véhicule, à l'aide d'une colle durcissant relativement lentement.

Il est connu et usuel de fixer des accessoires automobile directement sur le vitrage, à l'aide de colles. Ainsi, il est connu, de fixer des rétroviseurs du côté du pare-brise tourné vers l'intérieur de l'habitacle, de la façon suivante : au cours de la fabrication du pare-brise, on colle à la surface du verre un élément support métallique plat à l'emplacement prévu pour le rétroviseur, à l'aide d'une couche adhésive de préférence thermoplastique, par action de la température et de la pression. Ultérieurement, quand le vitrage est monté dans la carrosserie, le pied du rétroviseur est fixé sur cet élément. Des procédés de ce type sont connus par exemple par la publication de brevet FR 1 226 901, par le brevet US 3 130 103, ou encore par les brevets allemands DE PS 27 31 100, DE OS 26 04 030, DE OS 26 32 164.

Il est également connu, par exemple par la publication de brevet allemand DE OS 30 17 504 de fixer à l'aide d'une colle sur la face intérieure d'un vitrage arrière d'automobile un élément de fixation pour un témoin de freins supplémentaire.

Quand on utilise une colle thermoplastique pour ce type d'application, du point de vue de la technique de fabrication, un avantage certain consiste en une fixation immuable de l'élément support sur le vitrage obtenu en un temps relativement court. Il est toutefois difficile de trouver des colles thermoplastiques qui adhèrent de façon satisfaisante, aussi bien à la surface du verre qu'à un métal tel que celui dont est fait en général l'élément support. Pour cette raison, on a déjà procédé au garnissage des surfaces de contact de l'élément support métallique avec une couche d'émail ou une couche vitrifiée (DE PS 27 31 00).

Par ailleurs, on connait des colles qui permettent une liaison convenable et durable entre une surface en verre et une surface métallique. Ces colles sont toutefois des systèmes adhésifs à durcir, qui présentent une viscosité relativement faible, ainsi qu'un temps de durcissement relativement long. Quand on utilise de tels systèmes adhésifs, on doit par conséquent prévoir des mesures pour que pendant le temps nécessaire au durcissement, l'élément support soit fixé au vitrage de façon à ne pas être déplacé. Pour cela, il est connu par exemple de maintenir l'élément support d'un rétroviseur avec des moyens mécaniques, eux-mêmes fixés provisoirement au vitrage à l'aide de ventouses. Un tel système est par exemple décrit dans le brevet US 3 130 103.

L'invention vise à fournir un procédé de collage d'un élément support, en particulier un élément métallique servant de support à un accessoire, à une surface en verre, qui permet l'utilisation de colles ou de systèmes adhésifs qui durcissent relativement lentement, sans que des moyens mécaniques supplémentaires soient nécessaires pour maintenir l'élément support pendant l'étape de durcissement, et sans que le procédé de fabrication de vitrages automobiles équipés de tels éléments supports soit par là rendu plus compliqué, ou modifié de façon défavorable.

A cette fin, l'invention a pour objet un procédé de collage dans lequel le collage avec un adhésif qui durcit relativement lentement n'est opéré que sur une partie de la surface à coller et, sur l'autre partie de la surface à coller, on opère un collage avec une colle de contact qui sert à la fixation de l'objet pendant l'étape de durcissement de la colle à durcir.

Le procédé selon l'invention permet d'utiliser des colles qui présentent une viscosité relativement faible et durcissent relativement lentement, tout en palliant les inconvénients correspondants de la façon suivante : le maintien de l'élément métallique au vitrage qui est nécessaire pendant l'étape de durcissement, de la colle à durcissement lent, est effectué en utilisant simultanément une colle de contact. Tout de suite après avoir été pressé contre le vitrage, l'élément métallique y adhère suffisamment grâce à la colle de contact, pour que sans aucune opération supplémentaire pour fixer cet élément, le vitrage puisse subir les opérations usuelles de transformation et de manipulation, et donc sans que par ailleurs, il soit nécessaire de faire attention au fait que l'assemblage collé n'est pas encore durci. Tout risque de déplacement non désiré du système est donc supprimé.

La suite de la description se rapporte à un exemple de réalisation concernant le collage d'un élément support de rétroviseur à la surface d'un pare-brise, en relation avec les dessins annexés parmi lesquels :

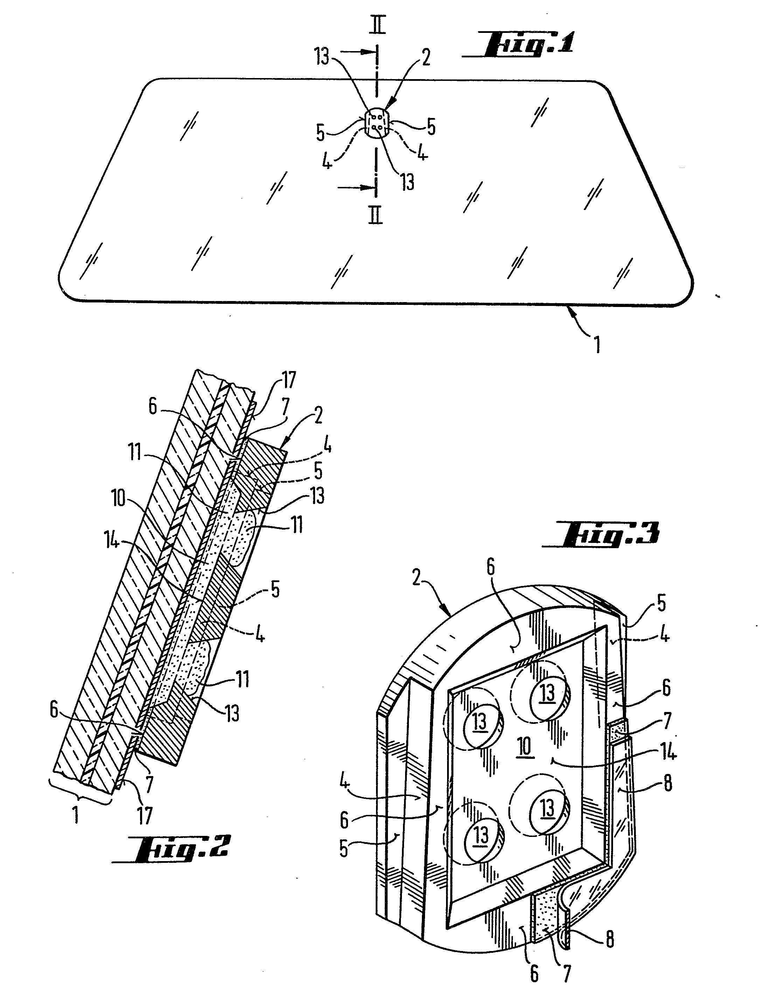

- la figure 1 est une vue générale d'un pare-brise équipé d'un élément support de rétroviseur fixé par collage,

- la figure 2 est une vue en coupe selon la ligne II-II de la figure 1, mettant en évidence l'assemblage collé selon l'invention.

- la figure 3 représente une forme de réalisation d'un élément support métallique particulièrement adapté au procédé selon l'invention.

L'élément support métallique 2 est fixé sur la surface du vitrage 1 tournée vers l'intérieur de l'habitacle du véhicule de façon à réaliser un assemblage collé. L'élément support 2 comprend de façon usuelle, une partie plate qui, comme cela apparait de façon détaillée à la fig. 3, présente des faces latérales 4 à angle droit par rapport à ladite partie plate, et des prolongements 5 en forme d'épaulement attenant auxdites faces. Ultérieurement, le pied correspondant du rétroviseur est enfilé sur ce support 2 de sorte qu'on réalise un assemblage bloqué entre l'élément support 2 et le pied de rétroviseur. L'élément support 2 présente du côté venant contre le vitrage une zone de bord 6 en forme d'encadrement en relief par rapport à la partie centrale. On applique sur cette zone 6 une couche d'une colle de contact 7 qui est recouverte d'un film de protection 8 que l'on peut arracher.

Une cavité 10 pratiquée dans la partie centrale de l'élément support sert à la réception de la masse adhésive 11. Cette masse adhésive est introduite en quantité mesurée dans la cavité 10 avant l'application de l'élément support 2 sur le vitrage 1. Ensuite le film de protection 8 est arraché de la couche de colle de contact 7 et l'élément support 2 est pressé à l'endroit désiré contre le pare-brise 1. Ainsi, la masse adhésive 11 se répartit à l'intérieur de la cavité 10 et pénètre simultanément dans les évidements 13 qui sont situés dans la paroi 14 de l'élément support 2. Les évidements 13 peuvent par exemple s'élargir vers l'extérieur en forme de cône. Par la pénétration de la masse adhésive 11 dans les évidements 13, on obtient un bon ancrage de

4

l'élément support au moyen de la masse adhésive. D'autre part, la mise en place de ces évidements présente l'avantage que l'excédent de masse adhésive 11 est pressé à l'intérieur du support, si bien qu'on évite qu'elle soit pressée à l'extérieur, entre la zone de bord 6 et le vitrage, ce qui pourrait produire des taches de colle inesthétiques.

Quand on presse l'élément support 2 contre le vitrage, la couche de colle de contact 7 vient s'appliquer contre le vitrage et fait en sorte·que aussitôt la zone de bord 6 de l'élément support 2 adhère à la surface du verre. Simultanément, sous l'effet de la pression, la masse adhésive 11 se répartit à l'intérieur de l'espace creux formé par la cavité 10, le remplit complètement et pénètre dans les évidements 13.

Généralement, l'élément support 2 n'adhère pas lui-même directement à la surface du verre, mais on place sur la surface du verre, à l'emplacement prévu pour le collage, une couche 17 opaque à la lumière et aux rayonnements UV. Il peut s'agir par exemple d'une couleur à cuire ou d'un émail. La mise en place d'une telle couche présente l'avantage que non seulement la couche de colle est dissimulée à la vue à travers le vitrage, mais également, la couche de colle est protégée contre l'action directe des rayonnements ultra-violets.

Comme masse adhésive 11, à durcissement lent, on peut utiliser par exemple avantageusement des systèmes à base de polyuréthane à un composant durcissant à l'humidité, tels que ceux décrits dans le brevet des Etats-Unis d'Amérique US 3 779 794. En utilisant de tels systèmes, qui durcissent sous l'influence de l'humidité ambiante, les évidements 13 pratiqués dans l'élément support présentent l'avantage supplémentaire que l'humidité de l'air peut accéder directement à la masse adhésive 11 à travers lesdits évidements, si bien que le durcissement de la masse adhésive est accélérée, et même, le cas échéant, tout simplement rendu possible.

En tant que couche de colle de contact 7, des feuilles adhésives disponibles dans le commerce, rendues adhésives sur leurs deux faces, conviennent tout à fait. Du fait que cette colle de contact sert simplement à fixer l'élément support au vitrage pendant l'étape de durcissement, aucune exigence particulière n'est requise concernant la durée de la tenue de l'assemblage réalisé avec cette colle de contact.

Bien entendu, les éléments support à coller avec la surface du verre peuvent présenter d'autres formes et configurations, suivant les cas d'applications envisagés. Par exemple, dans le cas où l'élément support doit servir à la fixation d'éclairage témoin, par exemple en tant que témoin de freins sur un vitrage, il peut présenter une forme arrondie ou tout autre forme appropriée.

## REVENDICATIONS

1. Procédé de collage d'un objet à une surface en verre, notamment d'un élément support métallique pour la fixation d'un accessoire sur un vitrage à l'intérieur d'un véhicule automobile, à l'aide d'une colle à durcissement relativement lent, caractérisé en ce que le collage à l'aide d'une colle à durcissement relativement lent n'a lieu que sur une partie de la surface à coller, et sur l'autre partie de ladite surface, la liaison est opérée à l'aide d'une colle de contact qui sert à la fixation de l'objet pendant l'étape de durcissement de la colle à durcir.

2. Procédé selon la revendication 1, caractérisé en ce que le collage au moyen de la colle de contact se fait sur une zone de bord en forme d'encadrement de la surface à coller, tandis que le collage au moyen de la colle à durcir se fait sur une zone centrale entourée de ladite zone de bord.

3. Procédé selon l'une des revendications 1 ou 2, caractérisé en ce que en tant que colle de contact on utilise une feuille adhésive sur ses deux faces.

4. Procédé selon l'une des revendications 1 à 3, caractérisé en ce que en tant que colle à durcissement relativement lent, on utilise une colle de polyuréthane à un composant durcissant à l'humidité.

5. Application du procédé selon l'une des revendications 1 à 3, au collage d'un élément support de rétroviseur à un pare-brise de véhicule automobile.

6. Application du procédé selon l'une des revendications 1 à 4 au collage d'élément support d'un éclairage témoin sur le vitrage arrière d'un véhicule automobile.

7. Elément support pour la mise en oeuvre du procédé selon l'une des revendications 1 à 6, caractérisé en ce que l'élément support (2) présente du côté prévu pour la réalisation de l'assemblage collé, une zone de bord (6) en forme d'encadrement en relief par rapport à la partie centrale.

**Fig.1**

**Fig.2**

**Fig.3**